(19) **Europäisches Patentamt / European Patent Office / Office européen des brevets**

(11) **EP 1 689 013 B1**

(12) **EUROPÄISCHE PATENTSCHRIFT**

(45) Veröffentlichungstag und Bekanntmachung des Hinweises auf die Patenterteilung:
**20.07.2011   Patentblatt 2011/29**

(51) Int Cl.:
***H01M 8/02*** *(2006.01)*

(21) Anmeldenummer: **05002307.6**

(22) Anmeldetag: **03.02.2005**

(54) **Brennstoffzelle**

Fuel cell

Pile à combustible

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**09.08.2006   Patentblatt 2006/32**

(73) Patentinhaber: **SIEMENS AKTIENGESELLSCHAFT**
**80333 München (DE)**

(72) Erfinder:
• **Häberlein, Manfred**
  **90574 Rosstal (DE)**
• **Zametzer, Georg**
  **91301 Forchheim (DE)**

(56) Entgegenhaltungen:
EP-A- 1 202 366      WO-A-00/02267
WO-A-02/073724      WO-A-03/092107
DE-A1- 10 323 882      DE-A1- 19 904 400

**Beschreibung**

Die Erfindung bezieht sich auf eine Brennstoffzelle mit einem flächigen Wärmetauscherelement, welches ein Netz aus Strömungskanälen aufweist, das sich zwischen zwei die Strömungskanäle gegen eine Umgebung des Wärmetauscherelements abgrenzende Seitenwände erstreckt und mindestens eine Einlass- und eine Auslassöffnung für ein Wärmeenergie transportierendes Strömungsmittel aufweist, wobei beim Durchströmen der Strömungskanäle über die Seitenwände Wärmeenergie zwischen dem Strömungsmittel und der Umgebung austauschbar ist.

Gattungsgemäße Brennstoffzellen sollen möglichst rasch auf Betriebstemperatur gebracht und dort gehalten werden. Abweichungen von der vorgegebenen Betriebstemperatur auch auf Teilen der aktiven Zellflächen gehen zu Lasten des Wirkungsgrades und der maximal erreichbaren Leistung der Brennstoffzelle. Deshalb soll eine möglichst große Fläche des Wärmetauscherelements der Brennstoffzelle auf gleicher Temperatur gehalten werden.

Aus der Offenlegungsschrift DE 103 23 882 A1 ist eine Brennstoffzelle mit zwei sich gegenüberliegenden Elektrolyt-Elektrodeneinheiten bekannt, zwischen denen eine Separatorplatte angeordnet ist. Die Separatorplatte ist aus zwei jeweils eine Prägung aufweisenden, sich an Kontaktflächen berührenden Platten gebildet. Die Separatorplatte trennt drei Fluiräume voneinander, nämlich zwei jeweils den Elektrolyt-Elektrodeneinheiten zugewandte Gasräume und einen Kühlraum zwischen ihren geprägten Platten. Dieser Kühlraum ist in zwei jeweils einer Platte zugewandte Teilräume aufgeteilt, die vom Kühlmittel ausschließlich alternierend durchströmbar sind. Die vorzugsweise als runde Vertiefungen ausgebildeten Prägungen sind über die Fläche der Separatorplatte gleichmäßig verteilt. Insbesondere wenn Kühlmittel nur an einer Stelle eingeleitet wird, stellt sich längs des Fläche im Wesentlichen eine Diagonalströmung in Richtung Auslass ein, wobei sich in den Randbereichen abseits von Ein- bzw. Auslass mit Kühlmittel unterversorgte Bereiche ausbilden. Das damit einhergehende Temperaturgefälle auf der Zellfläche beeinträchtigt die Homogenität und damit die maximal erreichbare Leistung der Brennstoffzelle.

Die Offenlegungsschrift DE 196. 02 315 Al offenbart eine Brennstoffzelle mit Flüssigkeitskühlung, die eine Kathode, einen Elektrolyten und eine Anode umfasst. Jeweils benachbarte Elektrolyt-Elektrodeneinheiten sind durch zwei sich an Kontaktflächen berührende, elektrizitäts- und wärmeleitende Separatoren voneinander getrennt. Die beiden Separatoren sind so miteinander verbunden, dass sie Hohlräume zur Aufnahme des Kühlmittels einschließen. Die Hohlräume definieren einen Verteilungskanal sowie über die Separatorenfläche verteilte Rillen oder Kanäle, durch die das verteilte Kühlmittel zum Wärmeaustausch mit dem umgebenden Kathoden- bzw. Anodenraum strömt. Zur gleichmäßigen Anströmung der gesamten Fläche erstreckt sich der Verteilungskanal für das Kühlmittel über die gesamte Länge einer Seitenkante der Separatorenfläche. Nachteilig an diesem bekannten System von Versorgungs- und Verteilungskanälen für das Zu- und Abführen von Kühlmittel sind der hohe konstruktive Aufwand sowie damit einhergehende Dichtigkeitsprobleme.

Die WO 03/092107 A offenbart eine Brennstoffzelle mit einer von einem Kühlmittel durchströmbaren Bipolarplatte, in die Strömungskanäle für ein Strömen des Kühlmittels von einer Einlass- zu einer Auslassöffnung geprägt sind. Die Strömungskanäle definieren hierbei Strömungsfelder, die für das Kühlmittel einen geringeren Strömungswiderstand in einem zentralen Bereich der Brennstoffzelle und einen höheren Strömungswiderstand in den Randbereichen der Brennstoffzelle aufweisen. Die sich hierdurch einstellenden, auf je eine lokale Teilfläche der Platten bezogenen Massenströme des Kühlmittels sind somit in dem zentralen Bereich größer als in den Randbereichen.

Die WO 00/02267 A1 offenbart eine Brennstoffzelle gemäß Oberbegriff des Patentanspruchs 1. Die Seitenwände des Wärmetauscherelementes werden hierbei durch zwei planare Bleche gebildet. Durch Biegen sind die Bleche derart geformt, dass sie Strömungskanäle mit einem dreieckförmigen, trapezförmigen oder kontinuierlich kurvenförmigen Strömungsquerschnitt ausbilden. Die Strömungskanäle eines Wärmetauscherelementes weisen hierbei jeweils gleich große Strömungsquerschnitte auf.

Der Erfindung liegt daher die Aufgabe zugrunde, eine Brennstoffzelle der eingangs genannten Art bereitzustellen, bei welcher sich eine gleichmäßige Temperaturverteilung über einen möglichst großen Teil der Wärmetauscherfläche einstellt.

Erfindungsgemäß wird die Aufgabe gelöst durch eine Brennstoffzelle der eingangs genannten Art, bei der die Strömungskanäle derart ausgebildet sind, dass die sich einstellenden, auf je eine lokale Teilfläche der Seitenwand bezogenen Massenströme des Strömungsmittels für eine Mehrzahl an Teilflächen der Seitenwand im Wesentlichen gleich groß sind. Dem liegt die Erkenntnis zugrunde, dass für den Wärmetransport zwischen dem Strömungsmittel und der Umgebung des Wärmetauscherelements die je Teilfläche und pro Zeiteinheit vorbei fließende Menge an Strömungsmittel ausschlaggebend ist. Die Auslegung der Strömungskanäle erfolgt daher erfindungsgemäß über die Einstellung der lokalen Massenströme des Strömungsmittels, die durch das Netz an Strömungskanälen fließen.

Erfindungsgemäß ist der auf eine lokale Teilfläche bezogene Massenstrom des Strömungsmittels durch einen der lokalen Teilfläche zugeordneten Strömungsquerschnitt des Strömungskanals vorgegeben. Entsprechend der Struktur des Strömungskanalnetzes können so bei einem vorgegebenen Strömungsmittel die lokalen Massenströme über den lokalen Strömungsquerschnitt eingestellt werden, um die lokalen Strömungsverluste - also Druckabfall und innere Reibung - zu kompensieren. Die lokalen Strömungsquerschnitte sind wiederum durch den konstruktiven Aufbau des Wärmetauscherelements beherrschbar.

Die Seitenwände weisen Prägungen auf und berühren sich an Kontaktflächen, wobei das Netz aus Strömungskanälen durch die Prägungen gebildet ist. Auf diese Weise lässt sich das Wärmetauscherelement konstruktiv und fertigungstechnisch einfach aus zwei Seitenwänden unter Einhaltung vorgebbarer Fertigungstoleranzen reproduzierbar herstellen. Durch die Ausgestaltung der Prägungen kann das Strömungskanalnetz geformt und dessen Querschnitte lokal unterschiedlich eingerichtet werden.

Dabei sind die Prägungen als im Wesentlichen runde Vertiefungen ausgebildet, wobei die Prägungen der einen Seitenwand relativ zu den Prägungen der anderen Seitenwand derart versetzt angeordnet sind, dass sich benachbarte Prägungen teilweise überlappen. Die beiden Seitenwände können dabei identische Muster an Prägungen aufweisen, die dann gegeneinander verschoben dergestalt verbunden werden, dass eine Prägung der einen Seitenwand mit einer oder mehreren Prägungen der anderen Seitenwand überlappen. Strömungsmittel, welches sich in einer Prägung befindet, kann dann durch die Überlappungen zu jeweils benachbarten Prägungen der anderen Seitenwand gelangen, so dass die Gesamtheit sich überlappender Prägungen das Strömungskanalnetz bildet. Das Strömungsmittel durchströmt dabei alternierend Prägungen der einen und der anderen Seitenwand des Wärmetauscherelements, so dass dieses beim Durchströmen gut durchmischt wird.

Erfindungsgemäß ist ein lokaler Strömungsquerschnitt zwischen zwei benachbarten Prägungen durch die Größe ihrer Überlappung gegeben, Bei festem Prägungsabstand kann damit der lokale Strömungsquerschnitt und damit der lokale Massenstrom des Strömungsmittels über den Durchmesser der als runde Vertiefungen ausgebildeten Prägungen eingestellt werden. Bei fester Prägungsgröße kann die Überlappung alternativ auch durch die Dichte der Prägungen - also ihren mittleren Abstand - variiert werden.

Die Seitenwände sind im Wesentlichen rechteckig ausgebildet, wobei eine Einlass- und eine Auslassöffnung für das Strömungsmittel an diagonal gegenüber liegenden Ecken der Seitenwände angeordnet sind. Aus flachen rechteckigen wärmetauscherelementen lassen sich kompakte quaderförmige Brennstoffzellenstapel zusammensetzen. Ohne aufwendiges Verteilungskanalnetz gelangt Strömungsmittel an einer Ecke in ein Wärmetauscherelement und verlässt dieses nach erfolgter Wärmeübertragung durch eine Auslassöffnung an der gegenüberliegenden Ecke.

Dabei wachsen die lokalen Strömungsquerschnitte mit zunehmendem Abstand von der die Einlass- und die Auslassöffnung verbindenden Diagonalen. Dem kürzesten Weg von der Einlass- zur Auslassöffnung wird damit ein erhöhter Strömungswiderstand aufgeprägt, so dass sich Strömungsmittel mit ausreichendem Massenstrom auch auf Bereiche abseits von der Diagonalverbindung verteilt. Durch eine geeignete Bemessung der Strömungsquerschnitte werden über die gesamte Fläche des Wärmetauscherelements im Wesentlichen konstante lokale Massenströme an Strömungsmittel eingestellt.

In einer bevorzugten Ausgestaltung der erfindungsgemäßen Brennstoffzelle ist der lokale Strömungsquerschnitt durch den Durchmesser und die Position der Prägungen über die Beziehung

$$A_i = 2 \cdot (t_p - t_s) \cdot l_{\ddot{u}}$$

bestimmt, worin $A_i$ die Fläche des Strömungsquerschnitts, $t_p$ die Tiefe der Prägung, $t_s$ die Dicke der Seitenwand und $l_{\ddot{u}}$ die Breite der Überlappung bedeuten, wobei sich die Breite der Überlappung aus der Beziehung

$$l_{\ddot{u}} = 2 \cdot \sqrt{\left(\frac{d_p}{2}\right)^2 - \left(\frac{l_v}{2}\right)^2}$$

ergibt, worin $d_p$ den Durchmesser der Prägung, $l_v$ den mittigen Abstand der überlappenden Prägungen bedeuten, und wobei der Durchmesser der Prägung der Beziehung

$$d_p = 2 \cdot \sqrt{\left(\frac{l_v}{2}\right)^2 + \left(\frac{l_1 + l_2}{a + b} \cdot \sqrt{\left(\frac{d_{p\,max}}{2}\right)^2 - \left(\frac{l_v}{2}\right)^2}\right)^2}$$

genügt, worin $l_1$ den Abstand der Prägungsposition von der Einlassöffnung, $l_2$ den Abstand der Prägungsposition von der Auslassöffnung, a die Länge der einen Seite der rechteckigen Seitenwand, b die Länge der anderen Seite der Seitenwand und $d_{P,max}$ den Durchmesser der Prägung an den Ecken ohne Öffnung bedeuten.

Diese Betrachtung geht von einem Modell gedachter Strömungskanäle aus, die jeweils von der Einlassöffnung geradlinig zur Position zweier sich überlappender Prägungen und von dort geradlinig zur Auslassöffnung führen. Ein gedachter Strömungskanal habe dabei die konstante Größe des sich jeweils durch die Überlappung der Prägungen ergebenden lokalen Strömungsquerschnitts. Die Massenströme durch gedachte Strömungskanäle sind dann gleich, wenn sich ihre Strömungsquerschnitte zueinander wie ihre Längen verhalten. Aus diesem Modell gewinnt man einen Skalierungsfaktor $(l_1 + l_2) / (a + b)$, mit welchem der maximale lokale Strömungsquerschnitt, respektive die maximale Überlappungsbreite, multipliziert werden muss, um den lokalen Strömungsquerschnitt, respektive die lokale Überlappungsbreite, des gedachten Strömungskanals zu erhalten, der durch die Überlappung derjenigen Prägungen gegeben ist, die von der Einlassöffnung den Abstand $1_1$ und von der Auslassöffnung den Abstand $1_2$ haben.

Vorzugsweise ist das Wärmetauscherelement einer erfindungsgemäßen Brennstoffzelle als eine zwischen Elektrolyt-Elektrodeneinheiten angeordnete Kühleinheit ausgebildet, deren Strömungskanäle von einem Kühlfluid als Strömungsmittel zur Aufnahme von Wärmeenergie aus der Umgebung der Kühleinheit durchströmbar ist. Mit Hilfe dieser Kühleinheit wird die im Betrieb der Brennstoffzelle in den umgebenden Gasräumen erzeugte Wärmeenergie gleichmäßig vom Kühlfluid abtransportiert, so dass die Brennstoffzelle mit konstanter homogen verteilter Betriebstemperatur arbeitet. Hierdurch wird bei optimalem Wirkungsgrad die maximal erreichbare Leistung erzielt.

Alternativ ist das Wärmetauscherelement einer erfindungsgemäßen Brennstoffzelle als eine zwischen gegenüber liegenden Randplatten angeordnete Heizeinheit ausgebildet, deren Strömungskanäle von einem Heizfluid als Strömungsmittel zur Abgabe von Wärmeenergie an die Umgebung der Heizeinheit durchströmbar ist. Damit lässt sich eine erfindungsgemäße Brennstoffzelle schnell und gleichmäßig auf eine über die Fläche des Wärmetauscherelements homogen verteilte Betriebstemperatur aufheizen.

Ein Ausführungsbeispiel sowie weitere Vorteile der Erfindung werden nachfolgend anhand der Zeichnungen näher erläutert, in deren

FIG 1    ein teilweise geschnittener Ausschnitt eines Wärmetauscherelements in Draufsicht,
FIG 2    ein Querschnitt eines Wärmetauscherelements gemäß FIG 1 längs der Schnittlinie II-II,
FIG 3    ein Querschnitt eines Wärmetauscherelements gemäß FIG 1 und FIG 2 längs der Schnittlinie III-III,
FIG 4    ein sich in einem Wärmetauscherelement gemäß FIG 1 bis FIG 3 erstreckendes Strömungskanalnetz,
FIG 5    zwei benachbarte, sich überlappende Prägungen eines Wärmetauscherelements,
FIG 6    eine Modellskizze für gedachte Strömungskanäle eines Wärmetauscherelementes

schematisch veranschaulicht sind.

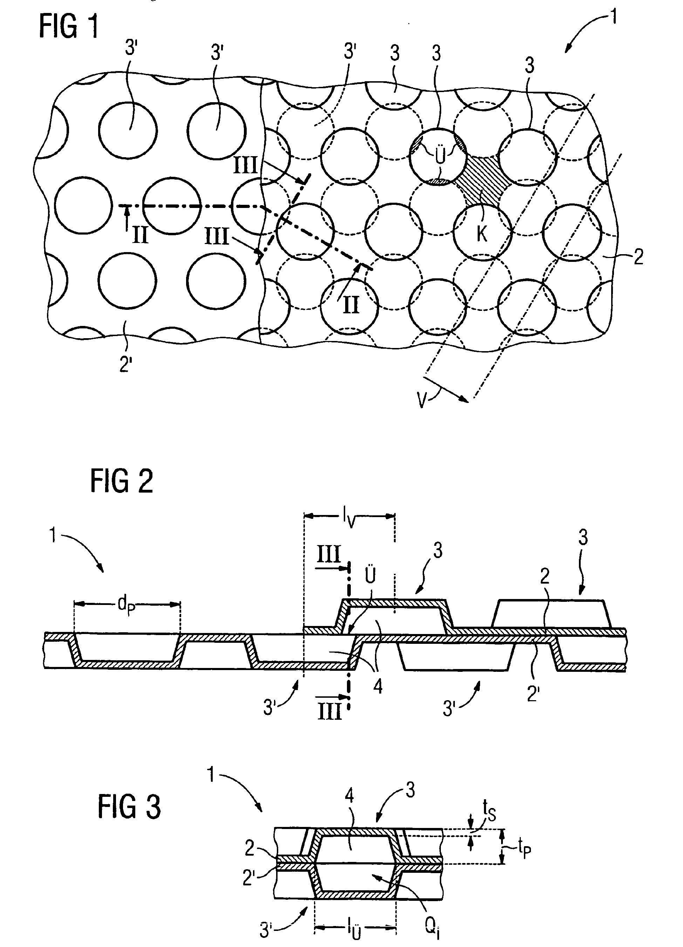

Nach FIG 1 weist ein Wärmetauscherelement 1 einer erfindungsgemäßen Brennstoffzelle, eine erste Seitenwand 2 und eine in FIG 1 darunter liegende Seitenwand 2' auf. Die beiden Seitenwände 2 bzw. 2' bestehen aus einem elektrizitäts- und wärmeleitenden Blechmaterial, in welches jeweils als runde Vertiefungen ausgebildete Prägungen 3 bzw. 3' eingearbeitet sind. Der Übersichtlichkeit halber sind die Prägungen 3, 3' durch nachbarten Prägungen 3, 3' dargestellt, wobei Form, Größe und Lage der Prägungen erfindungsgemäß auch variieren werden können. Die Seitenwände 2, 2' zeigen dasselbe Prägungsmuster, sind aber derart aufeinander gelegt, dass zwischen den Prägungen 3 der oberen Seitenwand 2 ein relativer Versatz V zu den Prägungen 3' der unteren Seitenwand 2' entsteht. Dies hat zur Folge, dass die aufeinander gelegten Seitenwände 2, 2' sich an Kontaktflächen K berühren, wo keine Prägung 3, 3' angeordnet sind. An Stellen mit Prägungen 3 oder 3' verhindert ein Hohlraum der runden Vertiefung eine Berührung der Seitenwände 2, 2'. An Stellen, wo sich eine Überlappung Ü zwischen Prägungen 3 der oberen Seitenwand 2 und Prägungen 3' der unteren Seitenwand 2' ergibt, sind die Hohlräume benachbarter Prägungen 3, 3' miteinander verbunden.

Diese Verbindung ist aus FIG 2 ersichtlich, die einen Querschnitt durch das Wärmetauscherelement 1 aus FIG 1 entlang der Schnittlinie II-II darstellt. Die Schnittlinie verläuft durch Mittelpunkte der als runde Vertiefungen ausgebildeten Prägungen 3, 3', die jeweils einen bestimmten Innendurchmesser $d_p$ aufweisen. Der Abstand $l_v$, um den der Mittelpunkt einer Prägung 3 der oberen Seitenwand 2 relativ zu dem Mittelpunkt der benachbarten Prägung 3' der unteren Seitenwand 2' versetzt ist, ist so gewählt, dass eine Überlappung Ü der benachbarten Prägungen 3, 3' entsteht. Dadurch entsteht eine Verbindung zwischen den Hohlräumen dieser Prägungen 3, 3' als Teil des Strömungskanals 4 für Strömungsmittel.

Im Bereich einer Überlappung Ü entsteht damit ein lokaler Strömungsquerschnitt $Q_i$, der in FIG 3 dargestellt ist. Bei der Darstellung handelt es sich um einen Querschnitt durch das Wärmetauscherelement 1 entlang der Schnittlinie III-III aus FIG 1 und FIG 2. Der lokale Strömungsquerschnitt $Q_i$ kann näherungsweise als Rechteck angenommen werden, dessen Länge der Breite $1_ü$ der Überlappung Ü und dessen halbe Höhe der Differenz aus der Tiefe tp einer Prägung 3, 3' und der Stärke $t_s$ einer Seitenwand 2, 2' entspricht. Die Fläche $A_i$ des lokalen Strömungsquerschnittes

$Q_i$ ergibt sich daher aus der Beziehung

$$A_i = 2 \cdot (t_P - t_s) \cdot l_{\ddot{U}}$$

Bei vorgegebener Materialstärke $t_s$ und Prägungstiefe tp, welche die Dicke des flächigen Wärmetauscherelementes 1 bestimmen, wird der lokale Strömungsquerschnittsfläche $A_i$ im Wesentlichen durch die Breite $1_{\ddot{U}}$ der Überlappung Ü bestimmt.

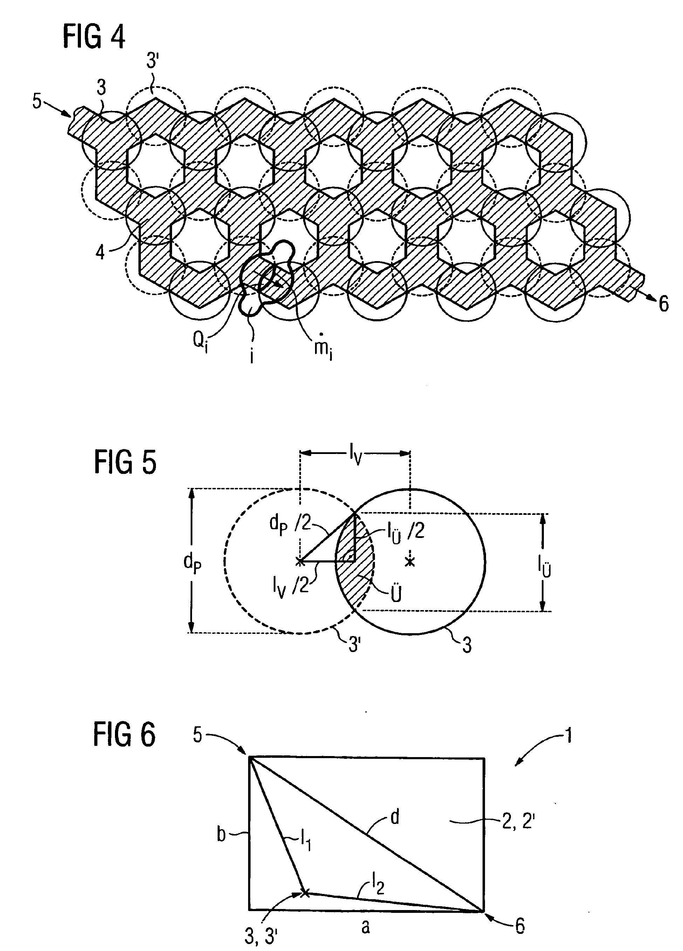

Durch die zueinander versetzte und sich teilweise überlappende Anordnung der Prägungen 3, 3' ergibt sich ein zwischen den Seitenwänden 2, 2' des Wärmetauscherelements 1 erstreckendes Netz aus Strömungskanälen 4, welches in FIG 4 schematisch veranschaulicht ist. Damit das Wärmeenergie transportierende Strömungsmittel, welches je nach Anwendung ein Kühl- oder ein Heizfluid sein kann, vom Hohlraum einer Prägung 3' in den Hohlraum einer benachbarten Prägung 3 strömen kann, muss es den lokalen Strömungsquerschnitt $Q_i$ passieren. Die lokale Teilfläche i, die dem Strömungsquerschnitt $Q_i$ zugeordnet ist, kommt dabei wenigstens teilweise mit Strömungsmittel in Form eines lokalen Massenstroms $\dot{m}_i$ in Berührung, über den Wärmeenergie an die Umgebung der Teilfläche i abgegeben oder von dieser aufgenommen wird. Durch geeignete Auslegung der lokalen Strömungsquerschnitte $Q_i$ erreicht man - in Abhängigkeit der Anordnung von Einlass- 5 und Auslassöffnungen 6 des Strömungskanalnetzes 4 - eine über die gesamte Fläche des Wärmetauscherelementes 1 homogene Temperaturverteilung.

Wie bereits erwähnt, ist der wesentliche Parameter für die Variierung des lokalen Strömungsquerschnittes $Q_i$ die Breite $1_{\ddot{U}}$ der Überlappung Ü zweier benachbarter Prägungen 3, 3'. Diese Breite $1_{\ddot{U}}$ ergibt sich über eine geometrische Betrachtung in FIG 5, in der die benachbarten Prägungen 3, 3' der Einfachheit halber denselben Durchmesser dp und einen Mittelpunktsabstand $1_v$ aufweisen. Die Breite $1_{\ddot{U}}$ der Überlappung Ü ergibt sich aus dem Lehrsatz des Pythagoras im rechtwinkligen Dreieck mit der Hypotenuse $d_P/2$ und den beiden Katheten $1_v/2$ und $l_{\ddot{U}}/2$. Formal lautet die Beziehung

$$l_{\ddot{U}} = 2 \cdot \sqrt{\left(\frac{d_P}{2}\right)^2 - \left(\frac{1_v}{2}\right)^2}$$

Damit kann die Fläche $A_i$ des lokalen Strömungsquerschnitts $Q_i$ einer jeden Teilfläche i der Seitenwände 2, 2' des Wärmetauscherselementes 1 einer erfindungsgemäßen Brennstoffzelle über Abstand $1_v$ und Durchmesser $d_P$ der Prägungen 3, 3' in den Seitenwänden 2, 2' eingestellt werden.

In FIG 6 ist ein einfaches Modell für die Ausgestaltung von Prägungen 3, 3' eines erfindungsgemäßen Wärmetauscherelementes 1 veranschaulicht. Es wird dabei von einem Wärmetauscherelement 1 mit rechteckigen Seitenwänden 2, 2' der Länge a und der Breite b ausgegangen. An diagonal gegenüber liegenden Ecken der Seitenwände 2, 2' ist eine Einlassöffnung 5 sowie eine Auslassöffnung 6 für Strömungsmittel angeordnet, welches zum Wärmeaustausch mit der Umgebung des Wärmetauscherelementes 1 durch ein in FIG 6 nicht dargestelltes Netz aus Strömungskanälen strömt. Bei über die Fläche des Wärmetauscherelementes 1 konstant gewähltem Prägungsabstand $1_v$ und Prägungsdurchmesser $d_p$ würde sich eine aus dem Stand der Technik bekannte Diagonalströmung von Strömungsmittel zwischen der Einlassöffnung 5 und der Auslassöffnung 6 ergeben, da in diesem Fall das Strömungsmittel den kürzesten Weg von Einlassöffnung 5 zur Auslassöffnung 6 einschlagen und damit in Randbereichen ohne Öffnung zu einer Unterversorgung an Kühl- bzw. Heizfluid führen würde. Erfindungsgemäß sind nun die Strömungskanäle 4 derart ausgebildet, dass die sich einstellenden, auf je eine lokale Teilfläche i bezogenen Massenströme $\dot{m}_i$ von Strömungsmittel für alle Teilflächen i der Seitenwand 2, 2' im Wesentlichen gleich groß sind. Dies wird erreicht, in dem die Fläche $A_i$ der lokalen Strömungsquerschnitte $Q_i$ mit zunehmendem Abstand von der die Einlass- 5 mit der Auslassöffnung 6 verbindenden Diagonalen zunimmt. Der Durchmesser $d_P$ einer beliebigen Prägung 3, 3', welche von der Einlassöffnung 5 den Abstand $1_1$ und von der Auslassöffnung 6 den Abstand $1_2$ hat, könnte beispielsweise folgendermaßen gewählt werden, wobei die Überlegungen von gedachten Strömungskanälen zwischen Einlassöffnung 5 und Auslassöffnung 6 ausgehen: der längste gedachte Strömungskanal führt über die Ecken ohne Öffnung und hat damit die Länge (a + b). An diesen Ecken sei die Breite $1_{\ddot{U},max}$ der Überlappung Ü und damit der Prägungsdurchmesser $d_{P,max}$ maximal. Es gilt:

$$l_{\ddot{U},max} = 2 \cdot \sqrt{\left(\frac{d_{P,max}}{2}\right)^2 - \left(\frac{1_v}{2}\right)^2}$$

Wenn sich durch einen kürzeren gedachten Strömungskanal der Länge $(l_1 + l_2)$ der gleiche Massenstrom $\dot{m}_i$ wie durch den eben beschriebenen längsten Strömungskanal einstellen soll, muss die Länge $l_{\ddot{u}}$ der Überlappung für diesen Strömungskanal skaliert werden mit dem Faktor $(l_1 + l_2)/(a + b)$. Im Rahmen dieses Modells ergibt sich daher der Prägungsdurchmesser dp einer Prägung 3, 3' mit der Abstandsposition $l_1$ bzw. $l_2$ gemäß folgender Beziehung:

$$d_P = 2 \cdot \sqrt{\left(\frac{l_v}{2}\right)^2 + \left(\frac{l_1 + l_2}{a + b} \cdot \sqrt{\left(\frac{d_{P\,max}}{2}\right)^2 - \left(\frac{l_v}{2}\right)^2}\right)^2}$$

Sicherlich lassen sich auch andere Konfigurationen des Netzes aus Strömungskanälen 4 ermitteln, die die einer lokalen Teilfläche i zugeordneten Strömungsquerschnitte $Q_i$ derart einstellen, dass eine homogene Verteilung der lokalen Massenströme $\dot{m}_i$ und damit der Temperatur auf den Seitenwänden 2, 2' gewährleistet wird.

**Patentansprüche**

1.  Brennstoffzelle mit einem flächigen wärmetauscherelement (1), welches ein Netz aus Strömungskanälen (4) aufweist, das sich zwischen zwei die Strömungskanäle (4) gegen eine umgebung des Wärmetauscherelements (1) abgrenzende Seitenwände (2, 2') erstreckt und mindestens eine Einlass- (5) und eine Auslassöffnung (6) für ein Wärmeenergie transportierendes Strömungsmittel aufweist, wobei beim Durchströmen der Strömungskanäle (4) über die Seitenwände (2, 2') Wärmeenergie zwischen dem Strömungsmittel und der Umgebung austauschbar ist, wobei die Strömungskanäle (4) derart ausgebildet sind, dass die sich einstellenden, auf je eine lokale Teilfläche (i) der Seitenwand (2, 2') bezogenen Massenströme $(\dot{m}_1)$ des Strömungsmittels für eine Mehrzahl an Teilflächen (i) im Weseitlichen gleich groß sind, wobei der auf eine lokale Teilfläche (i) bezogene Massenstrom $(\dot{m}_i)$ des Strömungsmittels durch einen der lokalen Teilfläche (i) zugeordneten Strömungsquerschnitt $(Q_i)$ des Strömungskanals (4) vorgegeben ist,
    **dadurch gekennzeichnet, dass**
    die Seitenwände (2, 2') Prägungen (3, 3') aufweisen und sich an Kontaktflächen (K) berühren, wobei das Netz aus Strömungskanälen (4) durch die Prägungen (3, 3') gebildet ist, wobei die Prägungen (3, 3') als im Wesentlichen runde Vertiefungen ausgebildet sind, wobei die Prägungen (3) der einen Seitenwand (2) relativ zu den Prägungen (3') der anderen Seitenwand (2') derart versetzt (v) angeordnet sind, dass sich benachbarte Prägungen (3, 3') teilweise überlappen (Ü), wobei ein lokaler Strömungsquerschnitt $(Q_i)$ zwischen zwei benachbarten Prägungen (3, 3') durch die Größe ihrer Überlappung (Ü) gegeben ist, wobei die Seitenwände (2, 2') im Wesentlichen rechteckig ausgebildet sind, wobei eine Einlass- (5) und eine Auslassöffnung (6) für das Strömungsmittel an diagonal gegenüber liegenden Ecken der Seitenwände (2, 2') angeordnet sind und wobei die lokalen Strömungsquerschnitte $(Q_i)$ mit zunehmendem Abstand von der die Einlass- (5) und die Auslassöffnung (6) verbindenden Diagonalen (d) wachsen.

2.  Brennstoffzelle nach Anspruch 1,
    **dadurch gekennzeichnet, dass** der lokale Strömungsquerschnitt $(Q_i)$ durch den Durchmesser $(d_p)$ und die Position $(l_1, l_2)$ der Prägungen (3, 3') über die Beziehung

$$A_i = 2 \cdot (t_P - t_s) \cdot l_{\ddot{u}}$$

bestimmt ist, worin
$A_i$ die Fläche des Strömungsquerschnitts $(Q_i)$,
$t_p$ die Tiefe der Prägung (3, 3'),
$t_s$ die Dicke der Seitenwand (2, 2') und
$l_{\ddot{u}}$ die Breite der Überlappung (Ü)
bedeuten, wobei sich die Breite der Überlappung (Ü) aus der Beziehung

$$l_0 = 2 \cdot \sqrt{\left(\frac{d_p}{2}\right)^2 - \left(\frac{l_v}{2}\right)^2}$$

ergibt, worin

dp den Durchmesser der Prägung (3, 3') und

$l_v$ den mittigen Abstand der überlappenden Prägungen (3, 3') bedeuten, und wobei der Durchmesser ($d_p$) der Prägung (3, 3') der Beziehung

$$d_p = 2 \cdot \sqrt{\left(\frac{l_v}{2}\right)^2 + \left(\frac{l_1 + l_2}{a + b} \cdot \sqrt{\left(\frac{d_{P,max}}{2}\right)^2 - \left(\frac{l_v}{2}\right)^2}\right)^2}$$

genügt, worin

$l_1$ den Abstand der Prägungsposition von der Einlassöffnung (5),

$l_2$ den Abstand der Prägungsposition von der Auslassöffnung (6),

a die Länge der einen Seite der rechteckigen Seitenwand (2, 2'),

b die Länge der anderen Seite der Seitenwand (2, 2') und

$d_{p,max}$ den Durchmesser der Prägung (3, 3') an den Ecken ohne Öffnung

bedeuten.

3. Brennstoffzelle mit einem Wärmetauscherelement (1) nach einem der Ansprüche 1 bis 2, wobei das wärmetauscherelement (1) als eine zwischen Elektrolyt-Elektrodeneinheiten angeordnete Kühleinheit ausgebildet ist, deren Strömungskanäle (4) von einem Kühlfluid als Strömungsmittel zur Aufnahme von Wärmeenergie aus der Umgebung der Kühleinheit durchströmbar ist.

4. Brennstoffzelle mit einem Wärmetauscherelement (1) nach einem der Ansprüche 1 bis 2, wobei das Wärmetauscherelement (1) als eine zwischen gegenüberliegenden Randplatten angeordnete Heizeinheit ausgebildet ist, deren Strömungskanäle von einem Heizfluid als Strömungsmittel zur Abgabe von Wärmeenergie an die Umgebung der Heizeinheit durchströmbar ist.

**Claims**

1. Fuel cell having a flat heat exchanger element (1), which has a network composed of flow channels (4), which network extends between two side walls (2, 2'), which bound the flow channels (4) from an area surrounding the heat exchanger element (1) and which network has at least one inlet opening (5) and one outlet opening (6) for a flow means which transports thermal energy, in which case thermal energy can be interchanged between the flow means and the surrounding area via the side walls (2, 2') during the flow through the flow channels (4), with the flow channels (4) being designed such that the resultant mass flows ($\dot{m}_i$), with respect to in each case one local subarea (i) of the side wall (2, 2'), of the flow means are substantially of the same magnitude for a plurality of subareas (i), with the mass flow ($\dot{m}_i$), with respect to one local subarea (i), of the flow means being predetermined by a flow cross section ($Q_i$), associated with the local subarea (i), of the flow channel (4),
**characterized in that**
the side walls (2, 2') have stamped areas (3, 3') and touch on contact surfaces (K), with the network being formed from flow channels (4) by the stamped areas (3, 3'), with the stamped areas (3, 3') being in the form of substantially round depressions, with the stamped areas (3) on one side wall (2) being arranged offset (V) relative to the stamped areas (3') on the other side wall (2') such that adjacent stamped areas (3, 3') partially overlap (Ü), with a local flow cross section ($Q_i$) between two adjacent stamped areas (3, 3') being governed by the magnitude of the overlap (Ü) thereof, with the side walls (2, 2') being substantially rectangular, with an inlet opening (5) and an outlet opening (6) for the flow means being arranged at diagonally opposite corners of the side walls (2, 2'), and with the local flow cross sections ($Q_i$) increasing as the distance from the diagonal (d) which connects the inlet opening (5) and the outlet opening (6) increases.

2. Fuel cell according to Claim 1,
   **characterized in that**
   the local flow cross section ($Q_i$) is governed by the diameter ($d_p$) and the position ($l_1$, $l_2$) of the stamped areas (3, 3') by the relationship

$$A_i = 2 \cdot \left(t_p - t_s\right) \cdot l_0$$

where
$A_i$ is the area of the flow cross section ($Q_i$),
$t_p$ is the depth of the stamped area (3, 3')
$t_s$ is the thickness of the side wall (2, 2'), and
$l_0$ is the width of the overlap (Ü),
with the width of the overlap (Ü) being given by the relationship

$$l_0 = 2 \cdot \sqrt{\left(\frac{d_p}{2}\right)^2 - \left(\frac{l_v}{2}\right)^2}$$

where
$d_p$ is the diameter of the stamped area (3, 3'), and
$l_v$ is the mean distance between the overlapping stamped areas (3, 3'), and with the diameter ($d_P$) of the stamped area (3, 3') satisfying the relationship:

$$d_P = 2 \cdot \sqrt{\left(\frac{l_v}{2}\right)^2 + \left(\frac{l_1 + l_2}{a + b} \cdot \sqrt{\left(\frac{d_{P\,max}}{2}\right)^2 - \left(\frac{l_v}{2}\right)^2}\right)^2}$$

where

$l_1$ is the distance between the stamped area position and the inlet opening (5),
$l_2$ is the distance between the stamped area position and the outlet opening (6),
a is the length of one side of the rectangular side wall (2, 2'),
b is the length of the other side of the side wall (2, 2') and
$d_{P,max}$ is the diameter of the stamped area (3, 3') at the corners without the opening.

3. Fuel cell having a heat exchanger element (1) according to one of claims 1 or 2, with the heat exchanger element (1) being in the form of a cooling unit which is arranged between electrolyte-electrode units, and in which case a cooling fluid, as flow means, can flow through the flow channels (4) in the cooling unit, in order to absorb thermal energy from the area surrounding the cooling unit.

4. Fuel cell having a heat exchanger element (1) according to one of Claims 1 or 2, with the heat exchanger element (1) being in the form of a heating unit which is arranged between opposite edge plates and a heating fluid can flow as flow means through the flow channels in the heating unit, in order to emit thermal energy to the area surrounding the heating unit.

**Revendications**

1. Pile à combustible ayant un élément ( 1 ) plat formant échangeur de chaleur, qui a un réseau de canaux ( 4 ) d'écoulement, qui s'étend entre deux parois ( 2, 2' ) latérales délimitant les canaux ( 4 ) d'écoulement par rapport à ce qui entoure l'élément ( 1 ) formant l'élément de chaleur et qui a au moins une ouverture ( 5 ) d'entrée et une ouverture ( 6 ) de sortie d'un agent en écoulement transportant de l'énergie calorifique, dans laquelle, lorsque les canaux ( 4 ) d'écoulement sont parcourus, de l'énergie calorifique peut être échangée par les parois ( 2, 2' ) latérales entre l'agent en écoulement et ce qui entoure l'élément ( 1 ) formant échangeur de chaleur, les canaux ( 4 ) d'écoulement étant tels que les courantes ($\dot{m}_i$) massiques qui s'établissent et qui sont rapportés à respectivement à une surface ( i ) partielle locale de la paroi ( 2, 2' ) latérale de l'agent en écoulement sont sensiblement égales pour une pluralité de surfaces (i) partielles, le coursant ($\dot{m}_i$) massique rapporté à une surface ( i ) partielle locale de l'agent en écoulement étant prescrit par une section ( $Q_i$ ) transversale d'écoulement du canal ( 4 ) d'écoulement, section attribuée à la surface ( i ) locale partielle,
**caractérisée en ce que**
les parois ( 2, 2' ) latérales ont des estampages ( 3, 3' ) et se touchent sur des surfaces ( K ) de contact, le réseau de canaux ( 4 ) d'écoulement étant formé par les estampages ( 3, 3' ), les estampages ( 3, 3' ) étant constitués sous la forme de cavités sensiblement rondes, les cavités ( 3 ) de l'une des parois ( 2 ) latérales étant décalées ( V ) par rapport aux cavités ( 3' ) de l'autre paroi ( 2' ) latérale de manière à ce que des estampages ( 3, 3' ) voisins se chevauchent ( Ü ) en partie, une section ( $Q_i$ ) transversale locale d'écoulement entre deux estampages ( 3, 3' ) voisins étant donnée par la valeur de leur chevauchement ( Ü ), les parois ( 2, 2' ) latérales étant sensiblement rectangulaires, une ouverture ( 5 ) d'entrée et une ouverture ( 6 ) de sortie de l'agent en écoulement étant placées sur des sommets opposés en diagonale des parois ( 2, 2' ) latérales, les sections ( $Q_i$ ) transversales d'écoulement locales croissant au fur et à mesure qu'augmente la distance entre les diagonales ( d ) reliant l'ouverture ( 5 ) d'entrée et l'ouverture ( 6 ) de sortie.

2. Pile à combustible suivant la revendication 1, **caractérisée en ce que** la section ( $Q_i$ ) transversale locale d'écoulement est déterminée par le diamètre ( $d_p$ ) et par la position ( $l_1, l_2$ ) des estampages ( 3, 3' ) par la relation

$$A_i = 2 \cdot (t_p - t_s) \cdot l_{\ddot{u}}$$

dans laquelle
$A_i$ est la surface de ( $Q_i$ ) transversale d'écoulement,
$T_p$ est la profondeur de l'estampage ( 3, 3' ),
$T_s$ est l'épaisseur de la paroi ( 2, 2' ) latérale et
$l_{\ddot{u}}$ est la largeur des chevauchements ( Ü ),
la largeur des chevauchements ( Ü ) étant obtenue par la relation

$$l_{\ddot{u}} = 2 \cdot \sqrt{\left(\frac{d_p}{2}\right)^2 - \left(\frac{l_v}{2}\right)^2}$$

dans laquelle
dp est le diamètre de l'estampage ( 3, 3' ) et
lv est la distance au milieu des estampages ( 3, 3' ) qui se chevauchent, et le diamètre ( $d_p$ ) de l'estampage ( 3, 3' ) satisfait à la relation

$$d_p = 2 \cdot \sqrt{\left(\frac{l_v}{2}\right)^2 + \left(\frac{l_1 + l_2}{a + b} \cdot \sqrt{\left(\frac{d_{p,max}}{2}\right)^2 - \left(\frac{l_v}{2}\right)^2}\right)^2}$$

dans laquelle

l₁ est la distance de la position de l'estampage à l'ouverture ( 5 ) d'entrée,

l₂ est la distance de la position de l'estampage à l'ouverture ( 6 ) de sortie,

a est la longueur de l'un des côtés de la paroi ( 2, 2' ) latérale rectangulaire,

b est la longueur de l'autre côté de la paroi ( 2, 2' ) latérale et

$d_{p,max}$ est le diamètre de l'estampage ( 3, 3' ) aux sommets sans ouverture.

3. Pile à combustible comprenant un élément ( 1 ) formant échangeur de chaleur suivant l'une des revendications 1 à 2, dans laquelle l'élément ( 1 ) formant échangeur de chaleur est constitué sous la forme d'une unité de refroidissement disposée entre des unités électrolyte-électrode, unité de refroidissement dont les canaux ( 4 ) d'écoulement peuvent être parcourus par un fluide de refroidissement en tant qu'agent en écoulement pour l'absorption de l'énergie calorifique de ce qui entoure l'unité de refroidissement.

4. Pile à combustible comprenant un élément ( 1 ) formant échangeur de chaleur suivant l'une des revendications 1 à 2, dans laquelle l'élément formant échangeur de chaleur est constitué sous la forme d'une unité de chauffage, qui est disposée entre deux plaques de bord opposées et dont les canaux d'écoulement peuvent être parcourus par un fluide de chauffage servant d'agent en écoulement pour céder de l'énergie calorifique à ce qui entoure l'unité de chauffage.

FIG 1

FIG 2

FIG 3

## FIG 4

## FIG 5

## FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10323882 A1
- DE 19602315
- WO 03092107 A
- WO 0002267 A1